(19) Europäisches Patentamt European Patent Office Office européen des brevets

(11) **EP 4 003 803 B1**

(12) **EUROPEAN PATENT SPECIFICATION**

(45) Date of publication and mention of the grant of the patent:
**12.06.2024 Bulletin 2024/24**

(21) Application number: **20760539.5**

(22) Date of filing: **24.07.2020**

(51) International Patent Classification (IPC):
**B60W 30/18** (2012.01) **B60W 40/09** (2012.01)
**B60W 60/00** (2020.01) **B62D 15/02** (2006.01)

(52) Cooperative Patent Classification (CPC):
**B60W 30/18163; B60W 40/09; B60W 60/0011;**
**B62D 15/0255;** B60W 2050/0026;
B60W 2050/0075; B60W 2520/10; B60W 2520/125;
B60W 2520/14; B60W 2540/043; B60W 2540/30;
B60W 2552/05; B60W 2556/10; B60W 2556/50

(86) International application number:
**PCT/IB2020/057029**

(87) International publication number:
**WO 2021/019407 (04.02.2021 Gazette 2021/05)**

(54) **CUSTOMIZATION OF AUTONOMOUS-DRIVING LANE CHANGES OF MOTOR VEHICLES BASED ON DRIVERS' DRIVING BEHAVIOURS**

ANPASSUNG VON FAHRSPURWECHSELN VON AUTONOM FAHRENDEN KRAFTFAHRZEUGEN BASIEREND AUF DEM FAHRVERHALTEN DES FAHRERS

PERSONNALISATION DE CHANGEMENTS DE VOIE À CONDUITE AUTONOME DE VÉHICULES À MOTEUR EN FONCTION DE COMPORTEMENTS DE CONDUITE DE CONDUCTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2019 IT 201900013086**

(43) Date of publication of application:
**01.06.2022 Bulletin 2022/22**

(73) Proprietor: **C.R.F. Società Consortile per Azioni**
**10043 Orbassano (TO) (IT)**

(72) Inventors:
• **RAFFONE, Enrico**
**10043 ORBASSANO (TO) (IT)**
• **REI, Claudio**
**10043 ORBASSANO (TO) (IT)**
• **BASSO, Michele**
**10043 ORBASSANO (TO) (IT)**

(74) Representative: **Studio Torta S.p.A. et al**
**Via Viotti, 9**
**10121 Torino (IT)**

(56) References cited:
**WO-A1-2017/168013    WO-A1-2018/094384**
**WO-A1-2018/210555**

• **YANG YANG WANG ET AL: "Study on Lane Change Trajectory Planning Considering of Driver Characteristics", SAE TECHNICAL PAPER SERIES, vol. 1, 7 August 2018 (2018-08-07), XP055696474, US ISSN: 0148-7191, DOI: 10.4271/2018-01-1627**

**Description**

## Cross-Reference to Co-Related Patent Applications

This patent application claims priority to Italian patent application No. 102019000013086 filed on 26.07.2019.

## Technical Field of the Invention

The present invention relates generally to motor-vehicle driving assistance, and in particular to customization of autonomous-driving lane changes based on drivers' driving behaviours.

The present invention finds application in any type of road motor-vehicles, both those used for transporting people, such as cars, buses, campervans, etc., and those used for transporting goods, such as industrial motor-vehicles (trucks, trailer trucks, articulated motor-vehicles, etc.) and light and medium/heavy commercial motor-vehicles (vans, van bodies, chassis-cabs, etc.).

## State of the Art

As is known, in recent years car manufacturers have invested considerable resources in the research for Advanced Driver Assistance Systems (ADAS) for improving driving safety and comfort.

For this reason and for the fact that they will help achieve the objectives on reduction of road accidents set by the European Union, ADAS are one of the fastest growing segments in the automotive sector and are destined to become increasingly popular in the coming years.

The safety features of the ADAS are designed to avoid collisions and accidents, by offering technologies that warn drivers of potential problems, or to avoid collisions by implementing safeguard measures and taking control of the motor-vehicles. Adaptive features can automate lighting, provide adaptive cruise control, automate braking, incorporate GPS/traffic alerts, connect smartphones, alert drivers of other motor-vehicles to hazards, keep drivers in the correct lane, or show them what there is in blind spots.

ADAS technology is based on vision/camera systems, sensor systems, automotive data networks, Vehicle-to-Vehicle (V2V) or Vehicle-to-Infrastructure (V2I) communication systems. Next-generation ADAS systems will increasingly exploit wireless connectivity to offer added value to V2V and V2I communication.

Technological developments such as integration of radars and cameras, and fusion of sensors between multiple applications, are expected to result in a cost reduction which could lead to a more significant penetration of ADAS in the compact vehicle market.

The end point of these technological developments is usually defined as self-driving or driverless motor-vehicles, or autonomous motor-vehicles. The two terms are in the vast majority of times used indifferently, as in the present discussion, while in some specialized environments these two terms are instead used differently to make subtle distinctions.

In particular, the term autonomous motor-vehicles has been used to indicate those vehicles that resemble today's ones, *i.e.,* with the seats facing forward and the steering wheel, and in which the driver is exempt from driving tasks only in certain circumstances, for example to perform an autonomous parking or automatic braking, or to implement an Adaptive Cruise Control designed to control the speed of the motor-vehicle in order to keep a safe distance from cars ahead. In the near future, autonomous motor-vehicles could take full control of driving in heavy traffic or on motorways.

The term self-driving motor-vehicles was instead used to indicate those motor-vehicles that are instead considered to represent a step forward compared to autonomous motor-vehicles, *i.e.,* motor-vehicles in which the steering wheel will disappear completely and the motor-vehicles will make the whole journey using the same sensory system used by autonomous motor-vehicles.

Disregarding this subtle distinction, the real distinction is between assisted driving motor-vehicles, where the vehicle "assists" the driver (who is therefore not exempt from paying attention), by braking if the motor-vehicle ahead brakes, slowing down when there is a need, and so on, and automatic or automated driving motor-vehicles, where, unlike the previous one, the motor-vehicle is completely autonomous in driving and the driver may not pay attention.

An example of this terminological distinction is presented in the article by Wood et al, (2012), in which the author writes: *"This article often uses the term autonomous rather than automated. The term "autonomous " has been chosen because it is currently the most common term in use (and more familiar to the general public). However, the term "automated" is certainly more accurate because it connotes the control or the actions performed by the motor vehicle, while "autonomous" implies acting alone and independently. Currently, most motor vehicles (that do not know they have a person on their seat) communicate with the Cloud or with other motor vehicles, and do not enter the destination independently. That is why the term "automated" would be better to describe this concept of motor vehicle".*

In 2014, SAE (Society of Automotive Engineers) International, a standardization body in the field of aerospace, automotive and vehicle industries that deals with developing and defining the engineering standards for motorized vehicles of all kinds, including cars, trucks, ships and aircraft, released a new international standard, J3016, which defined six different levels for automated driving. This classification is based on how much the driver has to intervene on the motor-vehicle, rather than on the motor-vehicle's capabilities.

The six levels of automated driving are:

Level 0 - No Automation: The driver must take care of every aspect of driving, without any type of electronic support;

Level 1 - Driver Assistance: The driver must take care of every aspect of driving, but he is supported at an informative level (in the form of visual or acoustic alerts) by electronic systems that can indicate the presence of dangerous situations or adverse conditions. At this level, the motor-vehicle is limited to analysing and representing situations, but the driver has total and full responsibility for driving the vehicle;

Level 2 - Partial Automation: The driver takes care of driving, but there is an initial driving integration. At this level, the motor-vehicle intervenes on acceleration and braking through safety systems, such as assisted braking, anti-collision emergency braking. Direction and traffic control remain under the control of the driver, although the steering may be managed in a partially automated manner in certain scenarios with clearly visible horizontal signs (systems named Lane Keeping Assist and, in the more complete versions, Traffic Jam Assist, Autosteer, Highway Assist depending on the motor-vehicle brand);

Level 3 - Conditional Automation: The motor-vehicle is able to manage driving in ordinary environmental conditions, managing acceleration, braking and direction, while the driver intervenes in problematic situations in the event of a system request or if the driver himself verifies adverse conditions;

Level 4 - High Automation: The automatic system is able to manage any eventuality, but it should not be activated in extreme driving conditions such as in bad weather;

Level 5 - Full Automation: The automatic driving system is able to manage all situations that can be managed by a human being, without any human intervention.

As part of the classification of these new technologies, the Economic Commission for Europe of the United Nations (UN/ECE) also intervened with Regulation n. 79 dE/ECE/324/Rev. 1/Add.78/Rev.3 - E/ECE/TRANS/505/Rev.1/Add.78/Rev.3 entitled "Agreement Concerning the Adoption of Harmonized Technical United Nations Regulations for Wheeled Vehicles, Equipment and Parts which can be Fitted and/or be Used on Wheeled Vehicles and Conditions for Reciprocal Recognition of Approvals Granted on the Basis of these United Nations Regulations", whose Addendum no. 78 of 30 November 2017, using a different nomenclature than the one used by SAE, prescribes uniform provisions on the configuration and operation of the steering systems of road motor vehicles.

Until now, in fact, the main requirement relating to steering systems has been the presence of a positive mechanical connection between the steering control, generally consisting of a steering wheel, and the wheels, to determine the trajectory of the motor vehicle. An over-dimensioned mechanical connection was considered not subject to failure.

The systems in which the driver maintains primary control of the motor vehicle but can be assisted by signals generated on board the motor vehicle that influence the steering system are called Advanced Driver Assistance Steering Systems.

Such systems can incorporate, for example, an Automatically Commanded Steering Function, which uses passive infrastructure elements to help the driver maintain the motor vehicle along an ideal trajectory (Lane Guidance, Lane Keeping, Heading Control), to perform low speed manoeuvres in confined spaces or to stop the motor vehicle at a pre-defined point (Bus Stop Guidance).

Advanced Driving Assistance Steering Systems may also include a Corrective Steering Function which, for example, warns the driver of leaving the lane (Lane Departure Warning), corrects the steering angle to prevent the motor vehicle from leaving the lane (Lane Departure Avoidance), or corrects the steering angle of one or more wheels to improve the dynamic behaviour or stability of the motor vehicle.

The Advanced Driver Assistance Steering Systems comprise, besides the abovementioned Lane Keep Assist - LKA, also the Enhanced Lane Keep Assist - ELKA, which is a Lane Keep Assist with Lane Centering, as well as the Lane Change Assist - LCA and the Active Lane Change Assist - ALCA.

In any Advanced Driver Assistance Steering System, the driver can decide in any moment to exclude deliberately the assistance function, for example for avoiding obstacles on the roadway.

This technology also allows influencing or controlling the steering wheel, the propulsion system and the braking system through sensors and signals generated on board the motor vehicle or by external elements thereto, for example signals transmitted by transponders placed along the road or active elements inserted in the road surface. Such systems, which do not require the presence of the driver on board the motor vehicle, have been defined Autonomous Steering Systems.

With reference to one of the aforementioned ADAS, i.e., the Active Lane Change Assist, it is a driving assistance system capable of managing overtakings or simple lane changes in autonomous driving.

In particular, the Active Lane Change Assist is capable of causing the motor vehicle to move from one lane to the other, indifferently to the left or to the right, when the driver operates the direction indicator for more than two seconds. Thanks to back and front radars, generally with a medium field of vision, a front camera and possible further sensors (e.g., lidar) managed in an integrated manner, an automotive electronic control unit can detect the presence of possible obstacles or other motor vehicles that can interfere with the intended trajectory of the motor vehicle within the following three seconds and, ascertained that everything is in the norm, controls a Steering AutoPilot for completing the lane change manoeuvre. Once activated, the Active Lane Change Assist operates starting from a lower threshold speed, for example 60, and, in some applications, up to a higher threshold speed, for example 180 km/h, and on roads which are provided with horizontal signs in good conditions. However, the driver of the motor vehicle always has the possibility to intervene, acting on the steering wheel and interrupting the procedure in any moment.

WO 2018/094384 A1 discloses autonomous motor vehicles or self-driving motor vehicles, wherein the level of comfort during autonomous driving offered to the user and the parameters of operation of the autonomous motor vehicle might increase or decrease a driver's comfort (anxiety) with the motor vehicle. Sensors in the motor vehicle can detect a user's driving style, comfort level and may propose an autonomy level to the user and/or parameters of operation. The system may score viable routes between the start and end locations of a trip using a numeric or other scale that denotes how viable the route is for autonomy. The score is adjusted using a variety of factors where a learning process leverages both offline and online data. The scored routes are not based simply on the shortest distance between the start and end points but determine the best route based on the autonomous driving context for the motor vehicle and the user.

WO 2018/210555 A1 relates to a method for operating a driver assistance device of a motor vehicle, comprising the following steps: detecting sensor data of a surrounding area of the motor vehicle, in which there is at least one target vehicle, which is located in front of the motor vehicle and in the same driving lane as the motor vehicle; detecting at least one driver characteristic describing a driver of the motor vehicle; assigning the driver to a predetermined driver class based on the driver characteristic; reading in driver-class-specific passing information, which describes a passing habit of the driver, based on the driver class assigned to the passing information; outputting a control signal of the driver assistance device, which evaluates a passing process of the motor vehicle with respect to the target vehicle, from a plurality of reference control signals, to which passing information is assigned, depending on the passing information and the sensor data; and outputting the control signal by way of the driver assistance device.

## Object and Summary of the Invention

The Applicant has noted that the Lane Change Assists currently on the market, although being satisfactory from many viewpoints, have a margin for improvement at least as to their behavior in performing lane changes, which sometimes can be so different from the drivers' habits to be uncongenial to the drivers and, consequently, to cause unpleasant driving experiences or comfort.

The Applicant has also noted that this same problem involves also automated-driving motor vehicles under development, where the automated driving systems are developed based on principles and logics which can equally cause driving experiences or comfort that may be uncongenial to the drivers.

The object of the present invention is to enhance the behavior of the Lane Change Assists, both those implemented by Autonomous Steering Systems and those implemented by Steering AutoPilots of lower automation level, so as to cause them to resemble the drivers' driving behaviors and thus make them more familiar to the drivers, thus enhancing the driving experience or comfort.

According to the present invention, an automotive electronic lane change system of a motor vehicle is provided, as claimed in the appended claims.

## Brief Description of the Drawings

Figure 1 is a high-level block diagram of automotive systems of a motor vehicle.
Figure 2 is a high-level block diagram of an Active Lane Change Assist according to the present invention.
Figure 3 shows lane change tables used by the Active Lane Change Assist according to the present invention.
Figure 4 is a functional block diagram of a Driver Profiling function implemented by the Active Lane Change Assist according to the present invention.
Figure 5 shows a schematization of a lane change manoeuvre and the plots of the lateral motion of a motor vehicle and of the heading angle of the motor vehicle during a lane change manoeuvre as a function of the longitudinal motion of the motor vehicle.

**Detailed Description of Preferred Embodiments of the Invention**

The present invention will now be described in detail with reference to the accompanying figures to enable a person skilled in the art to realize it and use it. Various modifications to the described embodiments will be immediately apparent to those skilled in the art and the generic principles described can be applied to other embodiments and applications without thereby departing from the protection scope of the present invention, as defined in the appended claims. Therefore, the present invention is not to be considered as limited to the described and illustrated embodiments, but it is to be given the widest protection scope in accordance with the features described and claimed.

Unless otherwise defined, all the technical and scientific terms used herein have the same meaning commonly used by people of ordinary skill in the field pertaining to the present invention. In case of conflict, the present description, including the definitions provided, will be binding. Furthermore, the examples are provided for illustrative purposes only and as such are not to be considered limiting.

In particular, the block diagrams included in the accompanying figures and described below are not to be understood as a representation of the structural features, i.e. construction limitations, but are to be interpreted as a representation of functional features, i.e. intrinsic properties of the devices and defined by the effects obtained, i.e. functional limitations, and which can be implemented in different ways, therefore so as to protect the functionalities thereof (possibility to operate).

In order to facilitate the understanding of the embodiments described herein, reference will be made to some specific embodiments and a specific lexicon will be used to describe them. The terminology used in the present document is intended to describe only particular embodiments, and is not intended to limit the scope of the present invention.

Broadly speaking, the present invention proposes to modify the paradigm based on which the known Active Lane Change Assists operate, both that of the self-driving or driverless motor vehicles equipped with Autonomous Steering Systems and that of the motor vehicles equipped with Steering AutoPilot of lower automation level (Highway Pilot (HP), AutoPilot (AP), Active Lane Change Assist (ALCA), by causing the Active Lane Change Assists to be designed to allow the autonomous-driving lane change manoeuvres to be customizable, at least in terms of lateral dynamics, based on the manual-driving lane change habits of the motor vehicles' drivers learnt during one or different manual-driving sessions of the motor vehicle.

In other words, the present invention essentially provides for designing the Active Lane Change Assists so that they are capable of learning the manual-driving lane change habits of the motor vehicles' drivers from the manual-driving sessions of the motor vehicles and of consequently adapting their automated-driving lane change behaviour, at least in terms of lateral dynamics, based on the manual-driving lane change habits of the motor vehicles' drivers, thus creating actual Self-Learning Active Lane Change Assists.

The self-learning of the manual-driving lane change habits of the motor vehicles' drivers essentially comprises computing one or different lane change quantities or parameters that are representative or resumptive of the manual-driving lane change habits of the motor vehicles' drivers, while the customization of the lane change behavior, at least in terms of lateral dynamics, essentially comprises computing or planning the autonomous-driving lane change trajectories based on the computed quantities or parameters.

In this way, the autonomous-driving lane change behaviors of the Active Lane Change Assists resemble, at least in terms of lateral dynamics, the manual-driving lane change habits of the motor vehicles' drivers, thus enhancing the driving experience or comfort.

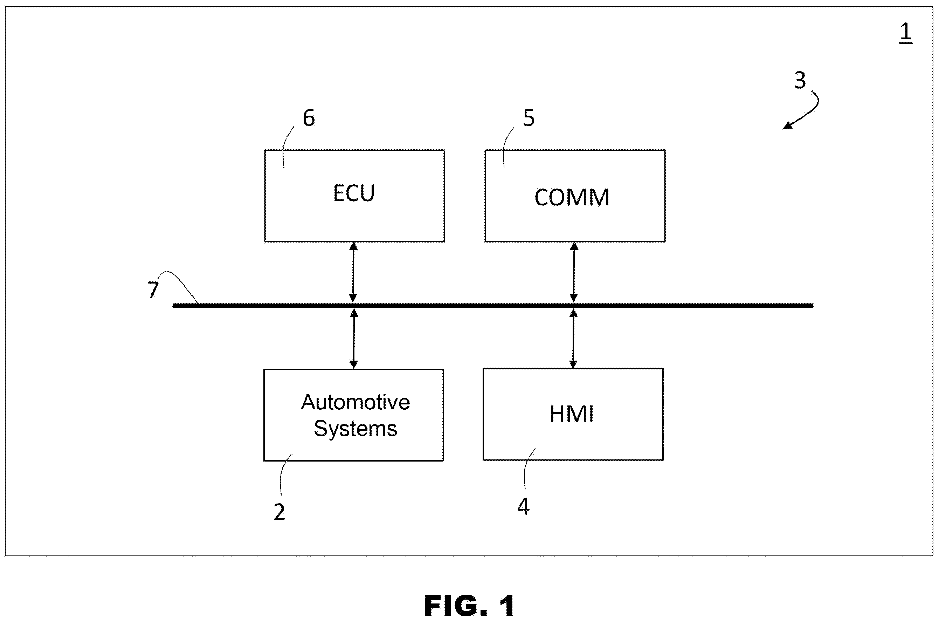

Figure 1 shows a block diagram of a motor vehicle **1** comprising automotive systems **2** including, among others, a propulsion system, a braking system, a steering system, and a sensory system designed to sense physical motor vehicle-related quantities, such as, exemplarily, wheel angle, steering wheel angle, yaw, longitudinal and lateral accelerations, longitudinal speed, geographical position, presence of obstacles in front of the motor vehicle **1,** etc.

The motor vehicle **1** comprises an automotive electronic control system **3** including:

- an automotive user interface **(HMI) 4** through which the users can interact with automotive systems **2,** such as the air conditioning system, the infotainment system, etc.,
- an automotive communication interface **5,** and
- processing and storing resources designed and programmed to control operation of the automotive systems **2,** the automotive user interface **4** and the automotive communication interface **5,** and to store and run a software comprising instructions which, when executed, cause the processing and storing resources to become configured to implement, among other things, a Self-Customizing Active Lane Change Assist according to the present invention, which will be described below in detail and indicated for the sake of brevity with HLCA, acronym for Humanized Lane Change Assist.

In order to implement the HLCA according to the present invention, it is highlighted that what matters are the operations implemented by the HLCA and not the hardware architecture with which these operations are implemented, to the extent that these could be all implemented by the same automotive electronic control unit or distributed among different automotive electronic control units, depending on the hardware architecture that the automotive manufacturer will consider suitable to use for the implementation of the HLCA.

For this reason, and also for descriptive convenience, and without thereby being in any way limited to the hardware architecture shown, in Figure 1 the processing and storing resources used for implementing the HLCA are exemplarily shown generically in the form of a single automotive electronic control unit (ECU) 6 in communication with the electronic control units dedicated to the control of the automotive systems **2,** of the automotive user interface **4** and of the automotive communication interface **5** through an automotive on-board communication network **7,** for example CAN, FlexRAy or others, and can be suitably designed and programmed to control, directly or indirectly, operation of the automotive systems **2,** of the automotive user interface **4** and of the automotive communication interface **5** so as to implement the HLCA.

The automotive user interface **4** comprises:

- one or more electronic displays, one or more of which may for example be touch sensitive ones, and one or more of which displaying icons that are userselectable by touch or suitable soft keys, and relates to automotive functions relative to the functioning of the automotive systems **2,** such as the infotainment system, the air conditioning system, the satellite navigation system, etc.;
- function selection and activation keys, some of hard type, arranged in various points of the passenger compartment of the motor vehicle **1,** among which the steering wheel, in the central console, in the molding, near the dashboard and the gearshift, and others of soft type, i.e., displayed on the electronic displays; and possibly
- a software application (APP) developed by the automotive manufacturer to allow users, once downloaded, installed and suitably set on their user terminals, to interact with some automotive systems **2,** in particular the infotainment system, through their user terminals.

The automotive communication interface **5** comprises one or more among:

- a bidirectional wired communication system, conveniently the standard serial communication system known as USB (Universal Serial Bus) interface, which, as is known, comprises suitable connectors, known as USB connectors or ports, which are connectable to other USB connectors through suitable cables known as USB cables,
- a short-range bidirectional radio communication system, hereinafter abbreviated with 'V2D' communication system, acronym for Vehicle-to-Device, operable to automatically detect the presence of short-range bidirectional radio communication systems, hereinafter abbreviated with 'D2V' communication system, acronym for Device-to-Vehicle, of user terminals present in its communication range and to communicate with the D2V communication systems detected and identified within its communication range, possibly after a pairing procedure, if required by the implemented communication technology, and
- a long-range bidirectional radio communication system, hereinafter for convenience abbreviated with 'V2X' communication system, acronym for Vehicle-to-Infrastructure, operable to communicate with a remote service center.

The V2D and D2V communication systems are configured to communicate through one or different short-range communication technologies comprising, expediently, the Bluetooth technology, for example the one according to the 4.0 specifications and also known with the names Bluetooth Low Energy, Bluetooth LE or Bluetooth Smart, the NFC technology, and the Wi-Fi technology.

The V2X communication system is configured to communicate through one or different long-range communication technologies, comprising, expediently, present and future mobile communication technologies, such as, 2G, 3G, 4G, 5G, etc.

The ECU **6** is designed to store and run a software comprising instructions which, when executed, cause the ECU **6** to become configured to implement, among other things, also the HLCA according to the present invention and to control the automotive systems **2,** in particular the steering system, to perform an autonomous-driving lane change based on a lane change trajectory planned by the HLCA.

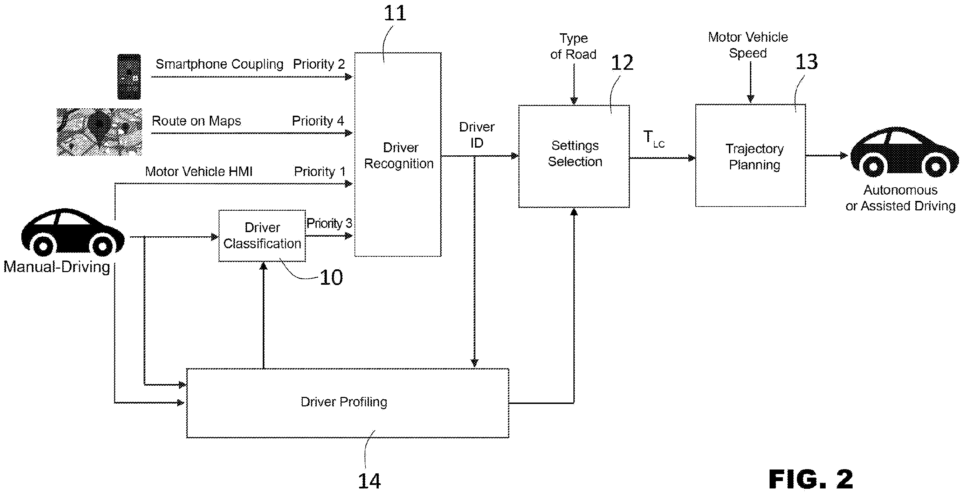

Figure 2 shows a high-level functional block diagram of the HLCA.

The HLCA is designed to implement the following functionalities:

- Driver Classification **10,**
- Driver Recognition **11,**
- Autonomous-Driving Lange Change Settings Selection **12,**
- Lane Change Trajectory Planning **13,** and
- Driver Profiling **14.**

The Driver Recognition **11** is designed to identify the different drivers of the motor vehicle **1** and to output Driver IDs based on one or different input quantities indicative of the identities of the drivers of the motor vehicle **1** and provided by one or different sources of information on the identity of the drivers of the motor vehicle **1** comprising, expediently, one or more among:

- an automotive infotelematic system with which the smartphones of the drivers may be paired when the drivers are inside the passenger compartment of the motor vehicle **1,** pairing which, as is known, takes place following a pairing procedure during which the IDs of the smartphones of the drivers are recognized,
- an automotive satellite navigation system, through which the drivers may be recognized based on their habitual routes,
- the automotive user interface **4,** which can be programmed to invite the drivers to identify themselves before starting to drive the motor vehicle **1,** and
- the output of the Driver Classification **10.**

The Driver Classification **10** is designed to recognize the drivers of the motor vehicle **1** based on their driving styles computed based on dynamic quantities of the motor vehicle **1** measured through the sensory system of the motor vehicle **1** or computed based on quantities measured through the sensory system of the motor vehicle **1** and indicative of the driving styles of the drivers, such as, expediently, the longitudinal speed of the motor vehicle **1,** the lateral acceleration of the motor vehicle **1,** and the yaw rate of the motor vehicle **1.**

The Autonomous-Driving Lane Change Settings Selection **12** is designed to determine one or different autonomous-driving lane change settings representative of the manual-driving lane change behaviors of the motor vehicle's drivers based on the Driver IDs outputted by the Driver Recognition **11** and on information identifying the type of road travelled by the motor vehicle **1** and provided by one or different sources of information on the type of road travelled by the motor vehicle **1.**

In particular, the Autonomous-Driving Lane Change Settings Selection **12** is designed to determine the different autonomous-driving lane change setting(s) by selecting them among different autonomous-driving lane change settings stored in the ECU **6** as a function of the types or categories of roads travelled by the motor vehicle **1** and of the Driver IDs.

In more detail, the ECU **6** is designed to store different autonomous-driving lane change tables, each of which relates to a corresponding type or category of road and contains one or different autonomous-driving lane change settings computed and stored by the ECU **6** for each driver of the motor vehicle **1** identified by the Driver Recognition **11** during previous travels along that road.

In particular, the roads that may be travelled by the motor vehicles can be classified beforehand by the automotive manufacturer according to proprietary criteria aimed at differentiating the performances of their HCLAs from those of the HCLAs developed by other automotive manufacturers and which can vary from basic classification criteria, according to which roads are simply classified in roads where it is possible to perform a lane change, for example roads with more lanes per roadway or also with one lane only per roadway where though it is possible to overtake, and in roads where it is not possible to perform a lane change, for example roads with one lane only per roadway where it is not possible to overtake, to more evolved criteria, for example criteria based on the road classification made by the rules of the road in force (highway code), such as a technical classification, which classifies the roads based on their construction, technical and functional features, for example highway, main and secondary suburban roads, urban road, other roads, number of lanes, etc., and possibly also an administrative classification which considers the state property owner of the road and the importance of the road, such as state, regional, provincial, municipal, local roads, etc..

It goes without saying that any other type of road classification different from those indicated above could be used by the automotive manufacturers.

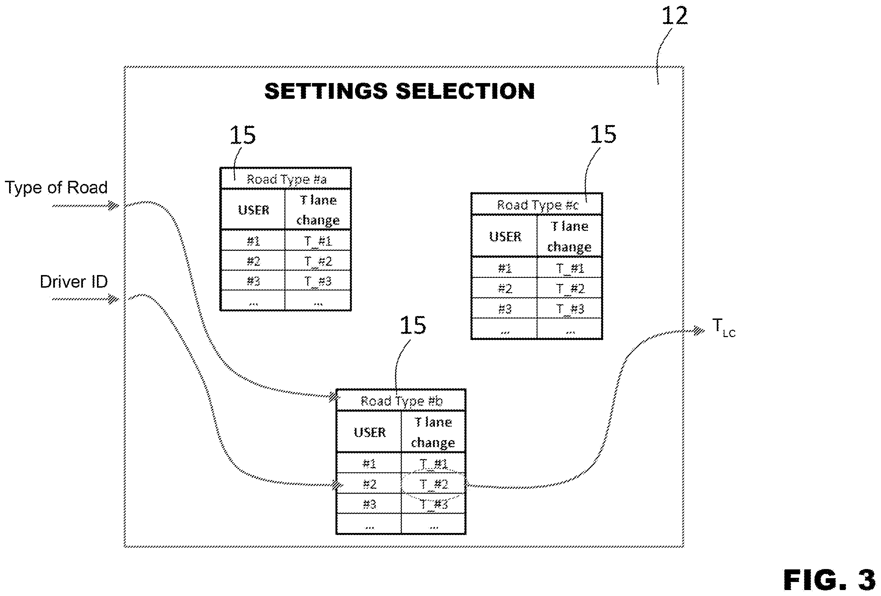

In the embodiment shown in Figure 3, the ECU **6** is designed to store autonomous-driving lane change tables **15,** each of which relates to a corresponding type or category of road which can be travelled by the motor vehicle **1** and contains autonomous-driving lane change setting(s) for each driver of the motor vehicle **1** along that type or category of road.

In particular, the autonomous-driving lane change settings are expediently expressed in the form of autonomous-driving lane change durations, which are computed based on one or different manual-driving lane change durations which the drivers of the motor vehicle **1** spent to carry out manual-driving lane changes while travelling in manual-driving along that type or category of road.

With reference again to Figure 2, the Autonomous Driving Lane Change Settings Selection **12** is designed to:

- receive the Driver ID of the motor vehicle **1** and information on the type or category of road travelled by the motor vehicle **1** provided, for example, by the automotive satellite navigation system or by the automotive front camera based on the processing of captured digital images, from which the horizontal and vertical road signs, and therefrom the type or category of road, may be recognize;

- identify the autonomous-driving lane change table associated with the type or category of road travelled by the motor vehicle **1;** and
- read in the identified autonomous-driving lane change table and output the autonomous-driving lane change duration associated with the driver of the motor vehicle **1.**

The Lane Change Trajectory Planning **13** is designed to compute or plan autonomous-driving lane change trajectories based on the autonomous-driving lane change settings determined by the Autonomous-Driving Lane Change Settings Selection **12,** as described in more detail below.

The planned autonomous-driving lane change trajectories are then used by the ECU **6** to perform, by appropriately controlling the automotive systems **2,** in particular the autonomous-driving resources of the motor vehicle **1,** be they a Steering AutoPilot or an autonomous-driving system, in a known manner and therefore not described in detail, corresponding autonomous-driving lane change manoeuvers which result in the planned autonomous-driving lane change trajectories being performed by the motor vehicle **1.**

The Driver Profiling **14** is designed to receive and temporarily store automotive quantities and constantly compute, based on the received automotive quantities, updates for the Driver Classification **10** and the Autonomous-Driving Lane Change Settings Selection **12.**

In particular, the Driver Profiling **14** is designed to update constantly the autonomous-driving lane change durations stored in the autonomous-driving lane change tables **15** based on the Driver IDs outputted by the Driver Recognition **11,** on dynamic automotive quantities, expediently the same on which the Driver Classification **10** operates, in the example considered the longitudinal speed of the motor vehicle **1,** the lateral acceleration of the motor vehicle **1,** and the yaw rate of the motor vehicle **1,** and on further automotive quantities measured, computed or determined by the automotive systems **2** and placed on the automotive communication network **7,** such as the level of driving automation used by the drivers of the motor vehicle **1** and road data provided by the front camera of the motor vehicle **1,** such as the lateral position of the motor vehicle **1** within the roadway of the road travelled by the motor vehicle **1,** the curvature of the road in front of the motor vehicle **1,** the type of road (urban, suburban, highway, number of lanes, etc.) travelled by the motor vehicle **1,** the longitudinal speed of the motor vehicle **1,** the lateral acceleration of the motor vehicle **1,** the yaw rate of the motor vehicle **1,** and the heading angle of the motor vehicle **1** relative to the trajectory defined by the centre of the lane/roadway.

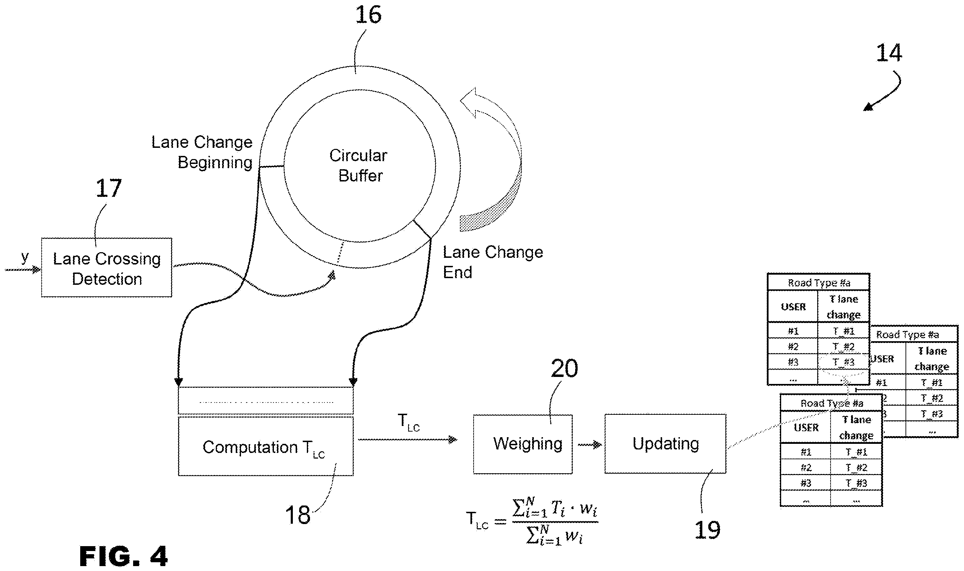

Figure 4 shows a more detailed functional block diagram of the Driver Profiling **14** for computing and updating the autonomous-driving lane change durations stored in the autonomous-driving lane change tables **15.**

As shown in Figure 4, the automotive quantities received by the Driver Profiling **14** are first of all stored temporarily in a suitable data structure, expediently in the form of a circular buffer **16,** having a suitable temporal length, for example 60 seconds.

Based on one or more of the automotive quantities received by the Driver Profiling **14,** expediently the lateral position of the motor vehicle **1,** the performance of a manual-driving lane change manoeuver of the motor vehicle **1** is thus recognized and the moment in time when the motor vehicle **1** crosses the line between the lanes between which it is moving (block **17**) is identified.

The automotive quantities stored in the circular buffer **16** in a time interval of predefined temporal length, for example 30 seconds, across the moment in time when the lane is crossed, are read from the circular buffer **16,** so that the read automotive quantities include automotive quantities stored both before and after the moment in time when the lane is crossed, in the considered example fifteen seconds before and fifteen seconds after the moment in time when the lane is crossed, and based on the automotive quantities read from the circular buffer **16,** the manual-driving lane change duration is then computed, which is indicative of the time spent by the driver of the motor vehicle **1** to perform in manual-driving the lane change manoeuver in the type of road travelled by the motor vehicle **1** (block **18**).

In one embodiment, the manual-driving lane change duration is computed by identifying first of all the moments in time when the manual-driving lane change manoeuver begins and ends based on the automotive quantities read from the circular buffer **16,** and then by computing the manual-driving lane change duration based on, in particular as difference between, the moments in time when the manual-driving lane change manoeuver begins and ends.

The moments in time when the manual-driving lane change manoeuver begins and ends may be identified based on any one of the criteria known in literature.

By way of example, Wierwille (1984) describes a lane change as composed of two parts: a first part represented by an initial deviation of the heading direction of the motor vehicle introduced by a steering input which causes an increase in the lateral deviation, and a second part represented by the fact that, when the motor vehicle gets closer to the final lateral position in the adjacent lane, the deviation of the heading direction of the motor vehicle is removed by applying a steering correction in the opposite direction to that of the initial steering input.

Therefore, the moments in time when the manual-driving lane change manoeuver begins and ends can for example be identified respectively as the moment in time when an initial steering input is applied, which causes an increase in the lateral deviation, and the moment in time when a steering correction is applied in the opposite direction to the one of the initial steering input, which causes the cancellation of the deviation of the heading direction of the motor vehicle.

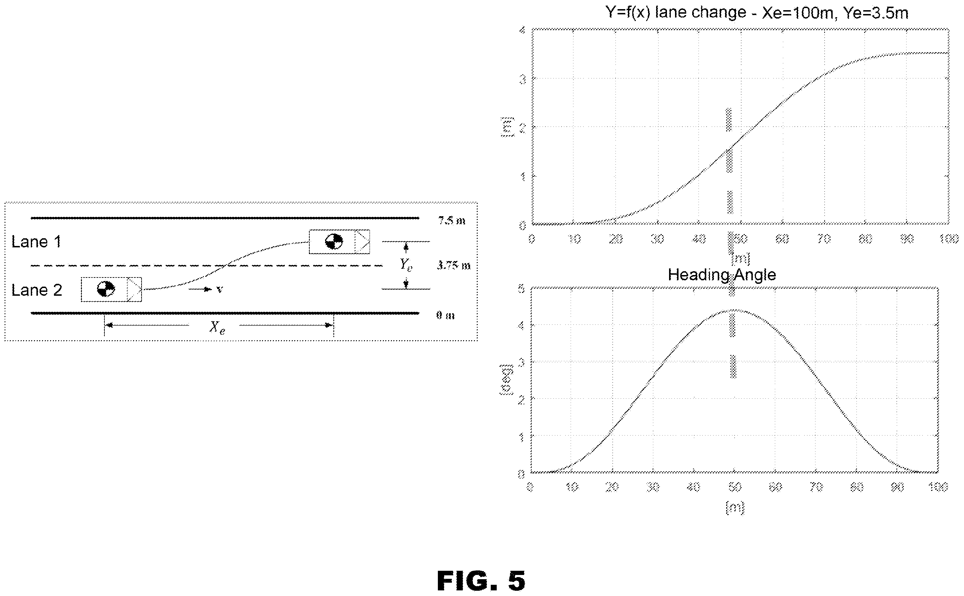

In a different preferred embodiment, the moments in time when the manual-driving lane change manoeuver begins and ends are not identified and, resultingly, the manual-driving lane change duration is not computed based on the moments in time when the manual-driving lane change manoeuver begins and ends, but in the way described in detail below with reference to Figure 5, which shows the plots of the lateral motion and the heading angle of the motor vehicle **1** during the manual-driving lane change manoeuver as a function of the longitudinal motion of the motor vehicle **1**.

In particular, as proposed by Chang Wang, Chuqing Zheng in "Lane Change Trajectory Planning and Simulation for Intelligent Vehicle", School of Automobile, Chang'an University, Xi'an, Shaanxi, China, 710064, Advanced Materials Research ISSN: 1662-8985, Vols. 671-674, pp. 2843-2846 doi:10.4028/www.scientific.net/AMR.671-674.2843, the trajectory followed by a motor vehicle during a lane change manoeuver can be mathematically modelled through the following seventh-degree polynomial:

$$y(x) = \frac{Y_e}{X_e^7}[35X_e^3x^4 - 84X_e^2x^5 + 70X_ex^6 - 20x^7]$$

where Xe is the longitudinal distance travelled by the motor vehicle during a lane change manoeuver and Ye is the lateral displacement of the motor vehicle during the lane change manoeuver, typically equal to the lane change width.

Since the maximum heading angle is reached half-way through the lane change manoeuver, this result in:

$$max\ Heading\ Angle = y'\left(\frac{X_e}{2}\right)$$

and the longitudinal distance Xe travelled by the motor vehicle during the lane change manoeuver is:

$$X_e = \frac{2.1875 \cdot Y_e}{max\ Heading\ Angle}$$

and its value can be easily computed based on the maximum heading angle reached during the lane change manoeuver and on the lateral displacement Ye of the motor vehicle during the lane change manoeuver.

Finally, the temporal duration of the lane change manoeuver can be computed as:

$$Lane\ Change\ Time\ Duration = \frac{X_e}{v}$$

where v is the speed of the motor vehicle **1** during the manual-driving lane change manoeuver.

With reference again to Figure 4, regardless of how it is computed, the manual-driving lane change duration is used to update the autonomous-driving lane change duration stored in the autonomous-driving lane change table **15** associated with the type or category of road travelled by the motor vehicle **1** in association with the driver of the motor vehicle **1** (block **19**).

In one embodiment, the computed manual-driving lane change duration is simply stored in the place of, thus replacing the, corresponding autonomous-driving lane change duration stored in the autonomous-driving lane change table **15** associated with the type or category of road travelled by the motor vehicle **1** in association with the driver of the motor vehicle **1**.

In the embodiment shown in Figure 4, instead, the manual-driving lane change duration is expediently subject to a weighting process based on previously computed manual-driving lane change durations so as to mitigate the intrinsic variance of this type of manoeuver (block **20**).

In one embodiment, the weighting process comprises computing, for each recognized manual-driving lane change manoeuver, a corresponding manual-driving lane change duration weighted based on a significant set of manual-driving lane change durations computed during previous manual-driving lane change manoeuvers along that type or category of road.

Expediently, the weighted manual-driving lane change duration is computed as a weighted average of the manual-driving lane change durations using higher weights for manual-driving lane change durations computed during manual-driving lane change manoeuvers more recent in time and lower weights for manual-driving lane change durations computed during manual-driving lane change manoeuvers more dated in time.

This embodiment allows computing a weighted lane change duration more representative of the drivers' driving habits, but it requires, on the other hand, storing a significant set of manual-driving lane change durations computed during manual-driving lane changes along that type or category of road.

In a different embodiment, the weighted process more simply comprises computing, for each manual-driving lane change manoeuvre, a manual-driving lane change duration weighted based on the current manual-driving lane change duration computed during the current manual-driving lane change manoeuvre and on the corresponding autonomous-driving lane change duration stored in the autonomous-driving lane change table in association with the driver of the motor vehicle **1.**

In this embodiment, the weighted manual-driving lane change duration is computed using expediently a lower weight for the current manual-driving lane change duration and a higher weight for the stored autonomous-driving lane change duration.

This embodiment allows computing a weighted lane change duration which is simpler than the previous one but, advantageously, which does not require storing a significant set of manual-driving lane change durations computed during manual-driving lane change manoeuvers, so resulting in it being less demanding in terms of exploitation of the storage resources of the motor vehicle **1.**

In both the embodiments described above, the weighted lane change duration is then stored in place of the corresponding autonomous-driving lane change duration stored in the autonomous-driving lane change table associated with the type or category of road travelled by the motor vehicle **1** in association with the driver of the motor vehicle **1.**

With regard instead to the lane change trajectory to be performed by the motor vehicle **1** in autonomous-driving, this can be planned in different ways.

In a first embodiment, the autonomous-driving lane change trajectory can be planned based on the mathematical model of the lane change trajectory through the above-mentioned seventh degree polynomial and on the autonomous-driving lane change duration stored in the ECU **6,** in the autonomous-driving lane change table associated with the type or category of road along which the motor vehicle **1** is travelling and for the current driver of the motor vehicle **1,** wherein the lateral distance Ye is made equal to the distance between the centre lines of the two adjacent road lanes between which the motor vehicle **1** has to perform the autonomous-driving lane change manoeuver, which is measured through the front camera of the motor vehicle **1,** while the longitudinal distance Xe of the autonomous-driving lane change manoeuver is computed based on the autonomous-driving lane change duration stored as:

$$X_e = v(t_0) \cdot T_{lane\ change}$$

where $v(t_0)$ is the speed of the motor vehicle **1** at the beginning of the autonomous-driving lane change manoeuver.

In a second embodiment, the lane change trajectory can be planned based on a predictive model on which the trajectory planners of the current ADASs operate.

The foregoing description allows the advantages of the present invention to be appreciated.

In particular, compared to the prior art solutions, the present invention provides a Lane Change Assist with a behavior that resembles the driving habits of the drivers of the motor vehicles along recurring paths or routes, thus enhancing the driving experience or comfort.

**Claims**

1. An automotive active lane change assist **(HCLA)** designed to cause a motor vehicle **(1)** to carry out autonomous-driving lane change manoeuvres;

   the automotive active lane change assist **(HCLA)** is further designed to customize the autonomous-driving lane change manoeuvres based on manual-driving lane change habits of a driver of the motor vehicle **(1)** learnt during one or different manual-driving sessions of the motor vehicle **(1);**
   the automotive active lane change assist **(HCLA)** being designed to customize the autonomous-driving lane change manoeuvres based on manual-driving lane change habits of a driver of the motor vehicle **(1)** by:

   - determining one or different autonomous-driving lane change settings for one or different drivers of the motor vehicle **(1)** and for one or different types or categories of roads along which the motor vehicle **(1)** can carry out autonomous-driving lane change manoeuvres; an autonomous-driving lane change setting for a driver of the motor vehicle **(1)** and for a type or category of road being representative of the manual-driving lane change habit of the driver of the motor vehicle **(1)** along that type or category of road;

the automotive active lane change assist (HCLA) is **characterized by** being designed to customize the autonomous-driving lane change manoeuvres based on manual-driving lane change habits of a driver of the motor vehicle (1) by:

- planning autonomous-driving lane change trajectories of the motor vehicle (1) along the type(s) or category(ies) of road(s) along which the motor vehicle (1) can carry out autonomous-driving lane change manoeuvres based on the autonomous-driving lane change setting(s) determined for the type(s) or category(ies) of road(s) travelled by the motor vehicle (1) and for the driver(s) of the motor vehicle (1) and,
- causing the motor vehicle (1) to carry out autonomous-driving lane change manoeuvres along the type(s) or category(ies) of road(s) along which the motor vehicle (1) can perform autonomous-driving lane change manoeuvres based on the planned autonomous-driving lane change trajectories.

2. The automotive active lane change assist (HCLA) of claim 1, further designed to determine one or different autonomous-driving lane change settings for one or different drivers of the motor vehicle (1) and for one or different types or categories of roads along which the motor vehicle (1) can carry out autonomous-driving lane change manoeuvres by:

- storing an autonomous-driving lane change table (15) for each type or category of road along which the motor vehicle (1) can perform autonomous-driving lane change manoeuvres; each autonomous-driving lane change table (15) contains at least one autonomous-driving lane change setting for each driver who has driven the motor vehicle (1) along the type or category of road with which the autonomous-driving lane change table (15) is associated;
- recognizing the driver of the motor vehicle (1) and the type or category of road travelled by the motor vehicle (1),
- identifying the autonomous-driving lane change table (15) corresponding to the type or category of road travelled by the motor vehicle (1), and
- reading in the identified autonomous-driving lane change table (15) the autonomous-driving lane change setting stored for the driver of the motor vehicle (1).

3. The automotive active lane change assist (HCLA) of claim 2, wherein the autonomous-driving lane change settings are stored in the autonomous-driving lane change tables (15) in the form of autonomous-driving lane change durations, each of which is computed based on at least a manual-driving lane change duration indicative of the time spent by the driver of the motor vehicle (1) to perform a manual-driving lane change manoeuvre along the type or category of road.

4. The automotive active lane change assist (HCLA) of claim 2 or 3, further designed to compute an autonomous-driving lane change duration by:

- receiving and temporarily storing in a data structure (16), expediently in the form of a circular buffer or technically equivalent, a stream of automotive quantities,
- recognizing (17), based on one or more of the received automotive quantities, performance of a manual-driving lane change manoeuvre and a moment in time when the motor vehicle (1) crosses a lane,
- reading from the data structure (16) at least part of the stored automotive quantities relating to a time interval across the moment in time when the motor vehicle (1) crosses the lane, so as to result in the read automotive quantities comprising automotive quantities stored both before and after the moment in time when the motor vehicle (1) crosses the lane,
- computing (18) a manual-driving lane change duration indicative of the time spent by the driver of the motor vehicle (1) to carry out the manual-driving lane change manoeuvre based on the automotive quantities read from the data structure (16), and
- computing and storing (19) in the associated autonomous-driving lane change table (15) the autonomous-driving lane change duration based on the computed manual-driving lane change duration.

5. The automotive active lane change assist (HCLA) of claim 4, further designed to compute an autonomous-driving lane change duration based on a weighted average of a computed manual-driving lane change duration and of a corresponding autonomous-driving lane change duration stored in the associated autonomous-driving lane change table (15), or based on a weighted average of a computed manual-driving lane change duration and of one or more manual-driving lane change durations computed during previous manual-driving lane change manoeuvres along the type or category of road.

6. The automotive active lane change assist **(HCLA)** of claim **4** or **5,** further designed to compute a manual-driving lane change duration based on a mathematical model of a trajectory travelled by a motor vehicle **(1)** during a lane change manoeuvre; the mathematical model expresses the lateral motion of the motor vehicle during the lane change manoeuvre as a function of the longitudinal motion of the motor vehicle during the lane change manoeuvre via a seventh degree polynomial, of the maximum heading angle reached by the motor vehicle halfway through the lane change manoeuvre, of the maximum lateral displacement of the motor vehicle during the lane change manoeuvre, and of the speed of the motor vehicle during the lane change manoeuvre.

7. The automotive active lane change assist **(HCLA)** of claim **6,** further designed to plan the autonomous-driving lane change trajectories based on the seventh-degree polynomial-based mathematical model of the trajectory travelled by a motor vehicle during a lane change manoeuvre and of the autonomous-driving lane change durations.


**Patentansprüche**

1. Aktiver Fahrzeug-Fahrspurwechselassistent (HCLA), der dazu konzipiert ist, ein Kraftfahrzeug (1) zu veranlassen, Fahrspurwechselmanöver beim autonomen Fahren auszuführen;

   wobei der aktive Fahrzeug-Fahrspurwechselassistent (HCLA) ferner dazu konzipiert ist, die Fahrspurwechselmanöver beim autonomen Fahren basierend auf Fahrspurwechselgewohnheiten beim manuellen Fahren eines Fahrers des Kraftfahrzeugs (1),
   die während einer oder unterschiedlichen manuellen Fahrsitzungen des Kraftfahrzeugs (1) erlernt wurden, anzupassen;
   wobei der aktive Fahrzeug-Fahrspurwechselassistent (HCLA) dazu konzipiert ist, die Fahrspurwechselmanöver beim autonomen Fahren basierend auf Fahrspurwechselgewohnheiten beim manuellen Fahren des Fahrers des Kraftfahrzeugs (1) anzupassen durch:

   - Bestimmen einer oder unterschiedlicher Fahrspurwechseleinstellungen beim autonomen Fahren für einen oder unterschiedliche Fahrer des Kraftfahrzeugs (1) und für einen oder unterschiedliche Typen oder Kategorien von Straßen, auf welchen das Kraftfahrzeug (1) Fahrspurwechselmanöver beim autonomen Fahren ausführen kann; eine Fahrspurwechseleinstellung beim autonomen Fahren für einen Fahrer des Kraftfahrzeugs (1) und für einen Typ oder eine Kategorie von Straße, der/die für die Fahrspurwechselgewohnheit beim manuellen Fahren des Fahrers des Kraftfahrzeugs (1) auf diesem Typ oder dieser Kategorie von Straße repräsentativ ist;

   wobei der aktive Fahrzeug-Fahrspurwechselassistent (HCLA), **dadurch gekennzeichnet ist, dass** er dazu konzipiert ist, die Fahrspurwechselmanöver beim autonomen Fahren basierend auf Fahrspurwechselgewohnheiten beim manuellen Fahren eines Fahrers des Kraftfahrzeugs (1) anzupassen durch:

   - Planen von Fahrspurwechselbahnen beim autonomen Fahren des Kraftfahrzeugs (1) auf einem/den Typ/Typen oder der/den Kategorie(n) von Straße(n), auf welchen das Kraftfahrzeug (1) Fahrspurwechselmanöver beim autonomen Fahren basierend auf der/den Fahrspurwechseleinstellung(en) ausführen kann, die für den/die Typ(en) und/oder Kategorie(n) von Straße(n), auf welchen das Kraftfahrzeug (1) fährt, und für den/die Fahrer des Kraftfahrzeugs (1) bestimmt werden, und
   - Veranlassen des Kraftfahrzeugs (1), Fahrspurwechselmanöver beim autonomen Fahren auf dem Typ/den Typen oder der/den Kategorie(n) von Straße(n) auszuführen, auf welchen das Kraftfahrzeug (1) Fahrspurwechselmanöver beim autonomen Fahren basierend auf den geplanten Fahrspurwechselbahnen beim autonomen Fahren ausführen kann.

2. Aktiver Fahrzeug-Fahrspurwechselassistent beim autonomen Fahren (HCLA) nach Anspruch 1, der ferner dazu konzipiert ist, eine oder unterschiedliche Fahrspurwechseleinstellungen beim autonomen Fahren für einen oder unterschiedliche Fahrer des Kraftfahrzeugs (1) und für einen oder unterschiedliche Typen oder Kategorien von Straßen zu bestimmen, auf welchen das Kraftfahrzeug (1) Fahrspurwechselmanöver beim autonomen Fahren ausführen kann, durch:

   - Speichern einer Tabelle (15) für Fahrspurwechsel beim autonomen Fahren für jeden Typ oder jede Kategorie von Straße, auf der das Kraftfahrzeug (1) Fahrspurwechselmanöver beim autonomen Fahren durchführen kann; wobei jede Tabelle (15) für Fahrspurwechsel beim autonomen Fahren mindestens eine Fahrspurwechseleinstellung beim autonomen Fahren für jeden Fahrer enthält, der das Kraftfahrzeug (1) auf dem Typ oder der Kategorie von Straße, dem/der die Tabelle (15) für Fahrspurwechsel beim autonomen Fahren zugeordnet ist, gefahren hat;

- Erkennen des Fahrers des Kraftfahrzeugs (1) und des Typs oder der Kategorie der von dem Kraftfahrzeug (1) befahrenen Straße,
- Identifizieren der Tabelle (15) für Fahrspurwechsel beim autonomen Fahren, die dem Typ oder der Kategorie der Straße, der/die von dem Kraftfahrzeug (1) befahren wird, entspricht, und
- Lesen in der identifizierten Tabelle (15) für Fahrspurwechsel beim autonomen Fahren der Fahrspurwechseleinstellung beim autonomen Fahren, die für den Fahrer des Kraftfahrzeugs (1) gespeichert ist.

3. Aktiver Fahrzeug-Fahrspurwechselassistent (HCLA) nach Anspruch 2, wobei die Fahrspurwechseleinstellungen beim autonomen Fahren in Tabellen (15) für Fahrspurwechsel beim autonomen Fahren in der Form von Fahrspurwechseldauern beim autonomen Fahren gespeichert sind, die jeweils auf mindestens einer Fahrspurwechseldauer beim manuellen Fahren basieren, die die Zeit angibt, die der Fahrer des Kraftfahrzeugs (1) zum Durchführen eines Fahrspurwechselmanövers beim manuellen Fahren entlang des Typs oder der Kategorie von Straße verbringt.

4. Aktiver Fahrzeug-Fahrspurwechselassistent (HCLA) nach Anspruch 2 oder 3, der ferner dazu konzipiert ist, eine Fahrspurwechseldauer beim autonomen Fahren zu berechnen durch:

   - Empfangen und vorübergehendes Speichern in einer Datenstruktur (16), zweckmäßig in der Form eines Ringpufferspeichers oder technisch gleichwertigem Elements, eines Stroms von Fahrzeugquantitäten,
   - Erkennen (17), basierend auf einer oder mehreren der empfangenen Fahrzeugquantitäten, der Durchführung eines Fahrspurwechselmanövers beim manuellen Fahren und eines Zeitpunkts, in dem das Kraftfahrzeug (1) eine Fahrspur überquert,
   - Lesen aus der Datenstruktur (16) mindestens eines Teils der gespeicherten Fahrzeugquantitäten bezüglich eines Zeitintervalls über den Zeitpunkt, wenn das Kraftfahrzeug (1) die Fahrspur überquert, um in den gelesenen Fahrzeugquantitäten zu resultieren, die Fahrzeugquantitäten umfassen, die sowohl vor als auch nach dem Zeitpunkt, in dem das Kraftfahrzeug (1) die Fahrspur überquert, gespeichert werden,
   - Berechnen (18) einer Fahrspurwechseldauer beim manuellen Fahren, die die Zeit angibt, die der Fahrer des Kraftfahrzeugs (1) zum Ausführen des Fahrspurwechselmanövers beim manuellen Fahren basierend auf den Fahrzeugquantitäten, die aus der Datenstruktur (16) gelesen werden, verbringt, und
   - Berechnen und Speichern (19) in der zugeordneten Tabelle (15) zum Fahrspurwechsel beim autonomen Fahren der Fahrspurwechseldauer beim autonomen Fahren basierend auf der berechneten Fahrspurwechseldauer beim manuellen Fahren.

5. Aktiver Fahrzeug-Fahrspurwechselassistent (HCLA) nach Anspruch 4, der ferner dazu konzipiert ist, eine Fahrspurwechseldauer beim autonomen Fahren basierend auf einem gewichteten Durchschnitt einer berechneten Fahrspurwechseldauer beim manuellen Fahren und einer entsprechenden Fahrspurwechseldauer beim autonomen Fahren, die in der zugeordneten Tabelle (15) für Fahrspurwechsel beim autonomen Fahren gespeichert ist, zu berechnen, oder basierend auf einem gewichteten Durchschnitt einer berechneten Fahrspurwechseldauer beim manuellen Fahren und einer oder mehreren berechneten Fahrspurwechseldauern beim manuellen Fahren, die während vorhergehender Fahrspurwechselmanöver beim manuellen Fahren auf dem Typ oder der Kategorie von Straße berechnet werden.

6. Aktiver Fahrzeug-Fahrspurwechselassistent (HCLA) nach Anspruch 4 oder 5, der ferner dazu konzipiert ist, eine Fahrspurwechseldauer beim manuellen Fahren basierend auf einem mathematischen Modell einer Bahn, die von einem Kraftfahrzeug (1) während eines Fahrspurwechselmanövers befahren wird, zu berechnen; wobei das mathematische Modell die seitliche Bewegung des Kraftfahrzeugs während des Fahrspurwechselmanövers in Abhängigkeit von der Längsbewegung des Kraftfahrzeugs während des Fahrspurwechselmanövers über ein Polynom siebten Grades des maximalen Kurswinkels, der von dem Kraftfahrzeug auf halbem Weg durch das Fahrspurwechselmanöver erreicht wird, der maximalen seitlichen Verlagerung des Kraftfahrzeugs während des Fahrspurwechselmanövers und der Geschwindigkeit des Kraftfahrzeugs während des Fahrzeugwechselmanövers ausdrückt.

7. Aktiver Fahrzeug-Fahrspurwechselassistent (HCLA) nach Anspruch 6, der ferner dazu konzipiert ist, Fahrspurwechselbahnen beim autonomen Fahren basierend auf dem mathematischen Modell, das auf dem Polynom siebten Grades der Bahn basiert, die von einem Kraftfahrzeug während eines Fahrspurwechselmanövers zurückgelegt wird, und den Fahrspurwechseldauern beim autonomen Fahren zu planen.

**Revendications**

1. Aide au changement de voie active d'automobile (HCLA) conçue pour amener un véhicule automobile (1) à effectuer des manoeuvres de changement de voie en conduite autonome ;

   l'aide au changement de voie active d'automobile (HCLA) est en outre conçue pour personnaliser les manoeuvres de changement de voie en conduite autonome sur la base d'habitudes de changement de voie en conduite manuelle d'un conducteur du véhicule automobile (1) apprises pendant une ou plusieurs sessions différentes de conduite manuelle du véhicule automobile (1) ;
   l'aide au changement de voie active d'automobile (HCLA) étant conçue pour personnaliser les manoeuvres de changement de voie en conduite autonome sur la base d'habitudes de changement de voie en conduite manuelle d'un conducteur du véhicule automobile (1) :

   - en déterminant un ou plusieurs réglages différents de changement de voie en conduite autonome pour un ou plusieurs conducteurs différents du véhicule automobile (1) et pour un ou plusieurs types différents ou une ou plusieurs catégories différentes de routes sur lesquelles le véhicule automobile (1) peut effectuer des manoeuvres de changement de voie en conduite autonome ; un réglage de changement de voie en conduite autonome pour un conducteur du véhicule automobile (1) et pour un type ou une catégorie de route étant représentatif de l'habitude de changement de voie en conduite manuelle du conducteur du véhicule automobile (1) sur ce type ou cette catégorie de route ;

   l'aide au changement de voie active d'automobile (HCLA) étant **caractérisée en ce qu'**elle est conçue pour personnaliser les manoeuvres de changement de voie en conduite autonome sur la base d'habitudes de changement de voie en conduite manuelle d'un conducteur du véhicule automobile (1) :

   - en planifiant des trajectoires de changement de voie en conduite autonome du véhicule automobile (1) sur le ou les types ou la ou les catégories de la ou des routes sur lesquelles le véhicule automobile (1) peut effectuer des manoeuvres de changement de voie en conduite autonome sur la base du ou des réglages de changement de voie en conduite autonome déterminés pour le ou les types ou la ou les catégories de la ou des routes parcourues par le véhicule automobile (1) et pour le ou les conducteurs du véhicule automobile (1) et,
   - en amenant le véhicule automobile (1) à effectuer des manoeuvres de changement de voie en conduite autonome sur le ou les types ou la ou les catégories de la ou des routes sur lesquelles le véhicule automobile (1) peut effectuer des manoeuvres de changement de voie en conduite autonome sur la base des trajectoires de changement de voie en conduite autonome planifiées.

2. Aide au changement de voie active d'automobile (HCLA) selon la revendication 1, conçue en outre pour déterminer un ou plusieurs réglages différents de changement de voie en conduite autonome pour un ou plusieurs conducteurs différents du véhicule automobile (1) et pour un ou plusieurs types différents ou une ou plusieurs catégories différentes de routes sur lesquelles le véhicule automobile (1) peut effectuer des manoeuvres de changement de voie en conduite autonome :

   - en enregistrant un tableau de changement de voie en conduite autonome (15) pour chaque type ou catégorie de route sur laquelle le véhicule automobile (1) peut effectuer des manoeuvres de changement de voie en conduite autonome ; chaque tableau de changement de voie en conduite autonome (15) contenant au moins un réglage de changement de voie en conduite autonome pour chaque conducteur qui a conduit le véhicule automobile (1) sur le type ou la catégorie de route auquel ou à laquelle le tableau de changement de voie en conduite autonome (15) est associé ;
   - en reconnaissant le conducteur du véhicule automobile (1) et le type ou la catégorie de route parcourue par le véhicule automobile (1),
   - en identifiant le tableau de changement de voie en conduite autonome (15) correspondant au type ou à la catégorie de route parcourue par le véhicule automobile (1), et
   - en lisant, dans le tableau de changement de voie en conduite autonome (15) identifié, le réglage de changement de voie en conduite autonome enregistré pour le conducteur du véhicule automobile (1).

3. Aide au changement de voie active d'automobile (HCLA) selon la revendication 2, dans laquelle les réglages de changement de voie en conduite autonome sont enregistrés dans les tableaux de changement de voie en conduite autonome (15) sous la forme de durées de changement de voie en conduite autonome, dont chacune est calculée sur la base d'au moins une durée de changement de voie en conduite manuelle indiquant le temps passé par le conducteur du véhicule automobile (1) pour effectuer une manoeuvre de changement de voie en conduite manuelle sur le type ou la catégorie de route.

4.  Aide au changement de voie active d'automobile (HCLA) selon la revendication 2 ou 3, conçue en outre pour calculer une durée de changement de voie en conduite autonome :

- en recevant et en enregistrant temporairement dans une structure de données (16) un flux de quantités automobiles, avantageusement sous la forme d'une mémoire tampon circulaire ou techniquement équivalente,
- en reconnaissant (17), sur la base d'une ou plusieurs des quantités automobiles reçues, la réalisation d'une manoeuvre de changement de voie en conduite manuelle et un moment où le véhicule automobile (1) traverse une voie,
- en lisant, dans la structure de données (16), au moins une partie des quantités automobiles enregistrées relatives à un intervalle de temps au-delà du moment où le véhicule automobile (1) traverse la voie, de manière à ce que les quantités automobiles lues comprennent des quantités automobiles enregistrées à la fois avant et après le moment où le véhicule automobile (1) traverse la voie,
- en calculant (18) une durée de changement de voie en conduite manuelle indiquant le temps passé par le conducteur du véhicule automobile (1) pour effectuer la manoeuvre de changement de voie en conduite manuelle sur la base des quantités automobiles dans la structure de données (16), et
- en calculant et en enregistrant (19), dans le tableau de changement de voie en conduite autonome (15) associé, la durée de changement de voie en conduite autonome sur la base de la durée de changement de voie en conduite manuelle calculée.

5.  Aide au changement de voie active d'automobile (HCLA) selon la revendication 4, conçue en outre pour calculer une durée de changement de voie en conduite autonome sur la base d'une moyenne pondérée d'une durée de changement de voie en conduite manuelle calculée et d'une durée de changement de voie en conduite autonome correspondante enregistrée dans le tableau de changement de voie en conduite autonome (15) associé, ou sur la base d'une moyenne pondérée d'une durée de changement de voie en conduite manuelle calculée et d'une ou plusieurs durées de changement de voie en conduite manuelle calculées lors de manoeuvres de changement de voie en conduite manuelle précédentes sur le type ou la catégorie de route.

6.  Aide au changement de voie active d'automobile (HCLA) selon la revendication 4 ou 5, conçue en outre pour calculer une durée de changement de voie en conduite manuelle sur la base d'un modèle mathématique d'une trajectoire parcourue par un véhicule automobile (1) lors d'une manoeuvre de changement de voie ; le modèle mathématique exprimant le mouvement latéral du véhicule automobile lors de la manoeuvre de changement de voie en fonction du mouvement longitudinal du véhicule automobile lors de la manoeuvre de changement de voie par un polynôme du septième degré de l'angle de cap maximal atteint par le véhicule automobile à mi-chemin de la manoeuvre de changement de voie, du déplacement latéral maximal du véhicule automobile lors de la manoeuvre de changement de voie, et de la vitesse du véhicule automobile lors de la manoeuvre de changement de voie.

7.  Aide au changement de voie active d'automobile (HCLA) selon la revendication 6, conçue en outre pour planifier les trajectoires de changement de voie en conduite autonome sur la base du modèle mathématique basé sur un polynôme du septième degré de la trajectoire parcourue par un véhicule automobile lors d'une manoeuvre de changement de voie et des durées de changement de voie en conduite autonome.

**FIG. 1**

EP 4 003 803 B1

FIG. 2

**FIG. 3**

**FIG. 4**

$$T_{LC} = \frac{\sum_{i=1}^{N} T_i \cdot w_i}{\sum_{i=1}^{N} w_i}$$

EP 4 003 803 B1

FIG. 5

EP 4 003 803 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 102019000013086
- WO 2018094384 A1
- WO 2018210555 A1

### Non-patent literature cited in the description

- Agreement Concerning the Adoption of Harmonized Technical United Nations Regulations for Wheeled Vehicles, Equipment and Parts which can be Fitted and/or be Used on Wheeled Vehicles and Conditions for Reciprocal Recognition of Approvals Granted on the Basis of these United Nations Regulations. *Regulation n. 79 dE/ECE/324/Rev. 1/Add.78/Rev.3 - E/ECE/TRANS/505/Rev.1/Add.78/Rev.3,* 30 November 2017

- Lane Change Trajectory Planning and Simulation for Intelligent Vehicle. **CHANG WANG ; CHUQING ZHENG.** Advanced Materials Research. School of Automobile, Chang'an University, vol. 671-674, 2843-2846